# EUROPEAN PATENT SPECIFICATION

(11) **EP 1 830 512 B1**
(45) Date of publication and mention of the grant of the patent: **06.07.2011**
(21) Application number: 05814017.9
(22) Date of filing: 30.11.2005
(51) Int. Cl.: H04L 29/06

(54) **A METHOD AND SYSTEM FOR REALIZING THE DOMAIN AUTHENTICATION AND NETWORK AUTHORITY AUTHENTICATION**
VERFAHREN UND SYSTEM ZUR REALISIERUNG VON DOMÄNENAUTHENTIFIZIERUNG UND NETZWERKAUTORITÄTSAUTHENTIFIZIERUNG
PROCEDE ET SYSTEME D'AUTHENTIFICATION DE DOMAINE ET D'AUTORITE DE RESEAU

(30) Priority: 04.12.2004 CN 200410097786
(43) Date of publication of application: 05.09.2007
(73) Proprietor: Huawei Technologies Co., Ltd., Longgang District, Shenzhen Guangdong 518129 (CN)
(72) Inventor: JIN, Tao, Shenzhen, Guangdong 518129 (CN)
(74) Representative: Kreuz, Georg Maria
(86) International application number: PCT/CN2005/002055
(87) International publication number: WO 2006/058493

(56) References cited:
- EP-A2- 1 311 930
- WO-A1-02/086718
- CN-A- 1 549 546
- CN-A- 1 595 897
- US-A1- 2004 168 090
- RIGNEY LIVINGSTON W WILLATS CYNO TECHNOLOGIES P CALHOUN SUN MICROSYSTEMS C: "RADIUS Extensions; rfc2869.txt" IETF STANDARD, INTERNET ENGINEERING TASK FORCE, IETF, CH, 1 June 2000 (2000-06-01), XP015008652 ISSN: 0000-0003

## Description

### Field of the Invention

The present invention relates to network access technologies in the field of communication and computer, in particular, to a method and a device for implementing a domain authentication and a network access privilege authentication.

### Background of the Invention

Most of existing enterprise networks and related local area networks use a domain system. For example, a lot of enterprise networks employ the Windows Primary Domain Controller of Microsoft Company. For network devices of an enterprise network, some service controls might need to be provided, which include that a user inputs different user names and passwords to obtain different network access privileges, wherein the user names and passwords of the user need to be input by the user himself/herself. Since a domain controller is used in the enterprise network, the user has to pass the domain authentication when he/she wants to access some internal network resources. Thus, the user further needs to input a corresponding user name and password again.

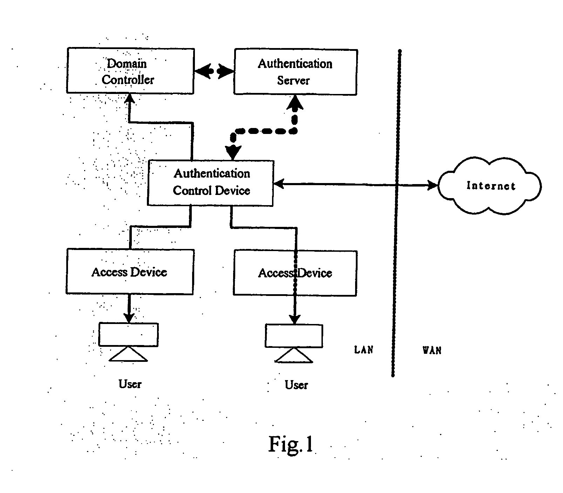

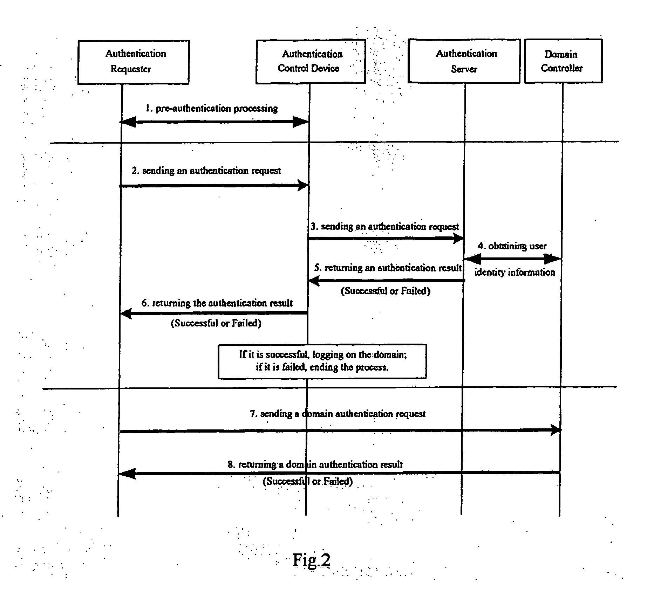

Therefore, Microsoft Company puts forwards a simple one-time authentication solution, in which the user name and password are input in the Windows system only once. The computer initiatively logs on the network according to user's domain identity information and then logs on the domain. Thus, the user can obtain a valid identity and an access privilege of the network and the domain simultaneously by inputting the user name and password only once. A typical networking mode is shown in Figure 1, and its authentication flow is shown in Figure 2. The primary processes are as follows:

1. A pre-authentication processing is performed, which refers to various preparations before an authentication, such as obtaining an IP address, performing a link layer negotiation, etc.

2. An authentication requester sends an authentication request containing user's identity information to an authentication control device. The user's identity information may be user name and password or a certain smart card such as SIM card with the user identity. In the Microsoft solution, the domain identity information such as domain user name, account etc. may also be used as user's identity information for network authentication.

3. After the authentication control device obtains the user's identity information, an authentication request is send to an authentication server. The authentication server is a logic entity, which is usually independent of the authentication control device, but it may also be a part of the authentication control device.

4. The authentication server directly obtains the stored user's identity information from a domain controller or from a corresponding storage system, such as Active Directory, etc. The reason is that the network and the domain use the same user's identity information.

5. The authentication server compares the user's identity information contained in the authentication request with stored user's identity information. If the user identity is determined to be valid, an authentication success result is returned. If the user identity is determined to be invalid, an authentication failure result is returned.

6. The authentication control device returns the authentication success or failure result information to the authentication requester. If the authentication is successful, it indicates that the authentication requester obtains a valid network access privilege, and the authentication control device may perform an authorization, accounting and access control etc. on the user. If the authentication is failed, it indicates that the user does not obtain a valid network access privilege, and the authentication control device will not grant a corresponding valid access privilege to the user.

7. If the authentication is successful, a Windows client automatically sends a domain authentication request to the domain controller.

8. The domain controller compares the user's identity information carried in the domain authentication request with the user's identity information stored in the domain controller or in a corresponding storage system, such as Active Directory etc. If the user's identity is determined to be valid, an authentication success result is returned. If the user's identity is determined to be invalid, an authentication failure result is returned. Then, the domain authentication success or failure result information is returned to the Windows client.

The above flow is a schematic flow for authentication process. In the practical protocols, the request and response processes are likely to have a plurality of processes.

In practical authentication protocols, in the solution provided by Microsoft Company, two authentication methods, PPPoE and 802.1 x, may be used between the authentication requester and the authentication control device. The Remote Access Dial-In User Service protocol (RADIUS) is used between the authentication control device and the authentication server.

Although user's identity information needs to be input only once when the above solution is used for the authentication, an RADIUS authentication server must be added and the authentication control device has to provide a point-to-point (PPP) MS-CHAP (Microsoft Challenge Handshake Authentication Protocol) authentication or an 802.1x authentication. In addition, the existing method has strict requirements on the related device such as user terminal, network device and authentication server etc. For example, at present, the authentication server provided by Microsoft Company and a few authentication servers that may access an Active Directory (AD, which is a kind of database provided by Microsoft Company for storing information such as user information, domain information and so on) can be only used. However, a lot of existing authentication servers on the network cannot be used.
D1 (US20040168090) describes a system and method for delegating a user authentication process for a networked application to an authentication proxy. A networked application may request a user to provide authentication information in order to access the application. Upon receiving this authentication information from the user, the client side of the networked application sends the information to the server side of the networked application. The server side of the application may then determine an appropriate authentication agent associated with the user to delegate the authentication process to. For example, for each application user, the server side of the application may maintain information associated with the user, such as the user's employer. The application may then match this employer information to an authentication agent running in the employer's network domain, and the authentication process may then be delegated to this authentication agent.

### Summary of the Invention

The invention provides a method and a device for implementing a domain authentication and a network access privilege authentication to solve the limitation in practical applications due to strict requirements on the user terminal, the network device and the authentication server by using the existing authentication method.

To solve the above limitation, the invention provides the following technical solutions.

A method for implementing domain authentication and network access privilege authentication, including:

receiving, by a tracking control device, a domain authentication request from a user terminal;

sending, by the tracking control device, the domain authentication request to a domain controller; receiving, by the tracking control device, a domain authentication result from the domain controller, in which a domain authentication on the user terminal is performed according to the domain authentication request; and

determining, by the tracking control device, whether the domain authentication on the user terminal is successful to obtain the a valid access privilege of the domain according to the domain authentication result; if the user terminal is successful to obtain the valid access privilege of the domain, obtaining a network access privilege corresponding to the user terminal and authorizing the user terminal to access the network; otherwise, rejecting the user terminal to access the network.

Wherein:

The tracking control device tracks and analyzes all domain authentication messages between the user terminal and the domain authentication controller during the domain authentication.

The tracking control device directly obtains the network access privilege corresponding to the user from itself, or the tracking control device obtains the network access privilege corresponding to the user from other network device.

When the tracking control device determines that an accounting is needed on the user, a designated accounting server is instructed to initiate the accounting after determining that the domain authentication on the user is successful.

A tracking control device, including:

a device management module for managing each of modules in the device; a route management module for managing a message route; a user management module for managing user information and privilege; and a message forwarding module for sending a message from an input port of the device to an output port, wherein the device further includes:

a message parsing module for parsing a domain authentication message sent by the message forwarding module and saving user information in the user management module; and

a message processing module for configuring a network access privilege for the user according to a domain authentication success message, which means that the user is successful to obtain the a valid access privilege of the domain, parsed by the message parsing module, and rejecting the user to access the network according to a domain authentication failure message, which means that the user is failed to obtain the a valid access privilege of the domain, parsed by the message parsing module.

The message processing module is built in the user management module.

The invention has the following beneficial effects:

1. By logging on only once, the user may automatically obtain the network access privilege and the domain privilege after the domain authentication is passed. Thus, this facilitates the use for users and improves greatly the availability.

2. In comparison with the existing domain authentication method, the method for the domain authentication according to the invention has fewer processes and higher authentication efficiency.

3. The invention lays no extra requirements on the tracking control device and the domain controller. An authentication server does not need to be added, nor is the device required to support the authentications similar to PPP CHAP or 802.1x. Therefore, the authentication method of the invention is not limited in practical applications.

### Brief Description of the Drawings

Figure 1 is a schematic diagram showing the typical networking for the network authentication and the domain authentication in the Windows system of the prior art;

Figure 2 is an authentication flow chart in which a user first logs on the network by his/her domain identity information and then logs on the domain in the prior art;

Figure 3 is a schematic diagram showing a networking for implementing an authentication according to an embodiment of the invention;

Figure 4 is a schematic structural diagram of a tracking control device according to an embodiment of the invention; and

Figure 5 is a flow chart for implementing an authentication according to an embodiment of the invention.

### Detailed Description of the Embodiments

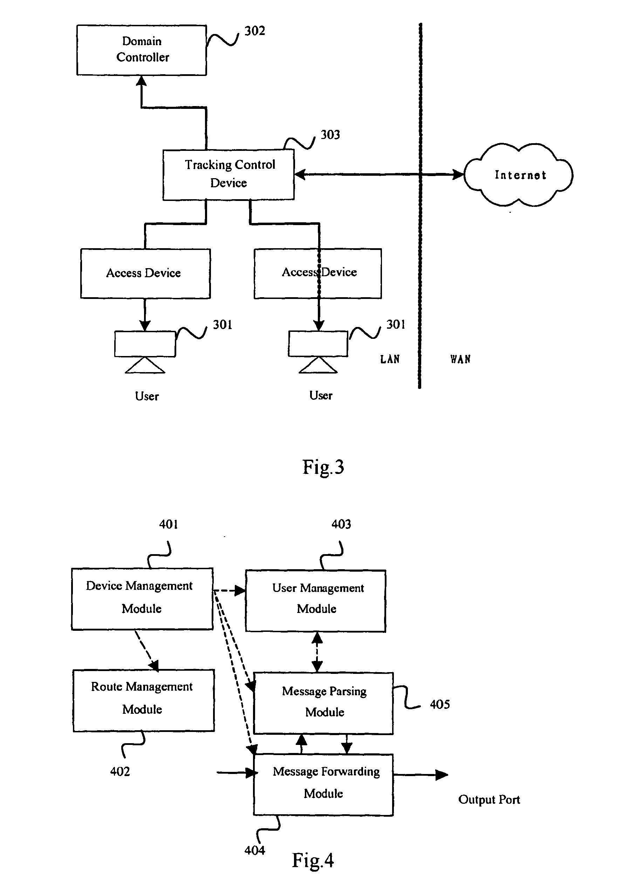

Referring to Figure 3, to implement an uniform processing of a domain authentication and a network access privilege control, the invention modifies the authentication control device of the prior art to a tracking control device by which a domain authentication on a user terminal is tracked during a whole process, and a network access privilege of the user is directly obtained and configured according to a domain authentication result.

Referring to Figure 4, the tracking control device mainly includes as follows:

a message forwarding module, which sends a message from an input port to a corresponding output port according to a switching mechanism or a routing forward mechanism. A domain authentication message needs to be sent to a message parsing module for parsing. Usually, the message forwarding module can directly send a domain authentication message that does not need to be modified. However, in some cases, for example, for the domain authentication message, some information needs to be added, deleted or modified, the domain authentication message needs to be reconstructed and then is sent. Therefore, the message forwarding module also reconstructs the obtained domain authentication message and then sends the reconstructed message.

the message parsing module, which parses the domain authentication message and saves an obtained user information in a user management module. When a part of attributes needs to be added, deleted or modified in the domain authentication message, the message parsing module further needs to reconstruct the domain authentication message;

the user management module, which manages user's basic network information such as IP, MAC (Medium Access Control), VLAN (Virtual Local Area Network) and so on, records domain authentication information and domain authentication state of the domain to which the user pertains, and instructs a corresponding accounting server to perform an accounting when the accounting is needed on the user;

a message processing module, which is further embedded in the user management module (not shown in Figure 4), for obtaining and configuring a network access privilege for the user when the message parsing module parses the domain authentication message of the user, and controlling the user privilege.

A device management module and a route management module, which are responsible for various managements on a device and a route according to the existing mode.

There are management information interaction interfaces between the device management module and the rest modules, and the message forwarding module determines how to send a message by the routing management module and the user management module.

A network access privilege of a user may be manually preconfigured in the user management module of the tracking control device and be directly obtained by the tracking control device. The network access privilege may also be sent by other devices in the network. In other words, a network access privilege of a user may be preconfigured and saved in other servers. The tracking control device can request a network access privilege from the other servers as required and then the other servers send the network access privilege to the tracking control device by a protocol, or the other servers dynamically assign the network access privilege to the user and then send the network access privilege to the tracking control device by a protocol after receiving the request from the tracking control device. The user authorization attributes may also be modified online by this method. The servers may employ protocols such as Remote Authentication Dial In User Service (RADIUS) protocol, Common Open Policy Service (COPS) protocol and so on, and sends the network access privilege in compliance with RFC2865/RFC2866/RFC2869 etc.

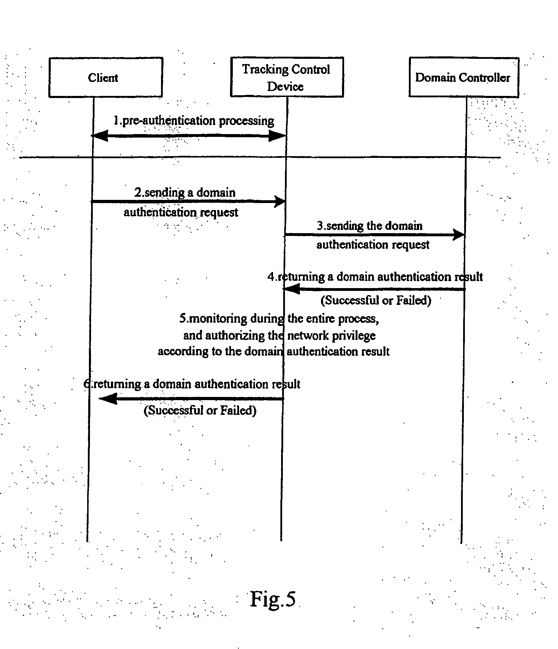

Referring to Figure 5, the detailed authentication processes are as follows.

Process 1: a pre-authentication processing is performed, which mainly includes various preparations before an authentication, such as obtaining an IP address, performing a link negotiation and so on.

Process 2: A user logs on a domain by inputting user information at a user terminal, and sends a domain authentication request to a domain controller.

Process 3: A tracking control device analyzes the domain authentication request after receiving it, and then sends the domain authentication request to a domain controller.

Analyzing the domain authentication request includes: parsing the structure, attribute and disclosed contents of the domain authentication message, and querying and recording a user's IP address, user name, domain authentication process and state.

Process 4: The domain controller compares user's identity information contained in the authentication request with user's identity information stored in the domain controller or, its corresponding storage system, such as Active Directory etc.. If the user identity is determined to be valid, an authentication success result is returned. If the user identity is determined to be invalid, an authentication failure result is returned.

Process 5: The tracking control device determines whether the domain authentication is successful according to the authentication result. If the authentication is successful, the network access privilege corresponding to the user is obtained and the corresponding privilege is configured, otherwise, the user is rejected to access the network.

After determining that the domain authentication on the user is successful, if an accounting is needed on the user, the tracking control device instructs an accounting server such as an RADIUS server or an FTP/TFTP (file transfer protocol/Trivial File Transfer Protocol) server etc. to initiate the accounting.

Process 6: the tracking control device sends a message to the user terminal. If the authentication is successful, it means that the user terminal simultaneously obtains a valid access privilege of the domain and the network. If the authentication is failed, it means that the user does not obtain a valid access privilege, and the tracking control device does not grant a corresponding network valid access privilege to the user.

The flow shown in Figure 5 is a schematic authentication process. In practical protocols, the request and response may have a plurality of processes. The tracking control device tracks the domain authentication result during the whole domain authentication process. In other words, from the domain authentication request of a user, all messages of various domain authentication protocols such as requests and responses for requests is tracked, information is obtained and analyzed, and user information and state are recorded as needed.

In practical domain authentication protocols, it is the NTLM (Windows NT LAN Manager) protocol in Windows NT 4.0, but it may be NTLM, Kerberos or the Distributed Password Authorization (DPA) protocols following Windows 2000. For the tracking control device, it may track and analyze all domain authentication protocols which include, but are not limited to, NTLM, Kerberos and DPA protocols.

When the tracking control device monitors that a session is terminated (a part of the domain authentication protocols may terminates the corresponding session), a time limit of the domain authentication expires (some domain authentications have a time limit), the user initiates a new request again, or the user is found to be offline by a network or application layer protocol, the accounting server is instructed to stop accounting.

A process of how to monitor the domain authentication process by the tracking control device will now be illustrated by taking the Kerberos domain authentication as an example. The Kerberos is a kind of open-system-oriented authentication mechanism for providing a trusted third party service to network communication. The Kerberos provides a strong encryption mechanism, by means of which a user terminal and a server can confirm each other's identity even in an insecure network connection environment. Moreover, all the subsequent communications are encrypted after the mutual identity authentication is passed. In other words, during the implementation, a key database of the systems communicating with the trusted third party server is set up, which is kept in the trusted third party server. Only Kerberos and the systems communicating with it possess a private key. Thus, a trusted network communication connection is set up by the private key and a session key which is created during the authentication. A Kerberos domain authentication process is as follows.

Process 1: When a user initially logs on Windows NT (i.e., domain controller), the Kerberos SSP (Security Service Port) of the user terminal obtains an initial Kerberos ticket-granting ticket (TGT), and Windows NT stores the TGT in a license buffer of the user terminal as a part of the user logon environment.

Process 2: When a user terminal program tries to access a network service on a server, the user terminal checks whether there is a valid session license for accessing the server in its license buffer as the user terminal operates. If there is no valid session license, the user terminal sends a request to a key distribution center to apply for a session license for accessing the server, and then buffers the applied session license locally.

Process 3: The session license is sent to the server when the user terminal sets up an initiating connection with the server.

Process 4: The server verifies the session license. Because a part of the session license is encrypted by using a shared key between the server and the key distribution center and there is a copy of the shared key in the buffer as the server-side Kerberos runs, the server can directly verify the user terminal without connecting with the authorization service in the key distribution center. When the user terminal also needs to verify the identity of the server, the server tallies up a received time stamp, encrypts the time stamp after tallied up with the session key, and then sends the encrypted time stamp to the user. The user determines the identity of the server by performing a decryption process using the session key after receiving a corresponding message.

There is a session key that is only known by the user terminal and the server after their identities are mutually verified. Thus, all subsequent communications can be protected by the session key.

In Process 1, the tracking control device may obtain the information indicating that TGT is obtained successfully (which means that the authentication on the user terminal is passed by the domain controller). Meanwhile, the privilege corresponding to the user may be obtained and controlled by statically configuring or dynamically obtaining the privilege and so on. Generally, all privileges corresponding to the user are obtained in this process.

In Process 2 or Process 4, the tracking control device may obtain the authentication result for obtaining a service by the user terminal, obtain and control the privilege corresponding to the user by statically configuring or dynamically obtaining the privilege and so on. Strictly, the authentication result on the user should be obtained in Process 4, but, imprecisely, it may be obtained in Process 2. Generally, a corresponding privilege of a service corresponding to a user is configured in this process.

In the above processes, an accounting may be initiated, while a license (which includes TGT and service license) is obtained. A valid time of the license is further included in the message, while the corresponding license is obtained. Therefore, the accounting is stopped when the valid time of the license expires or when the user is found offline.

Thus, according to the invention, the user needs to log on the domain only once, and then the network access privilege can be automatically obtained after the domain authentication is passed. Thus, this facilitates the use for users and greatly improves the availability. In addition, the technical solutions according to the invention further solve the limitation in practical applications due to strict requirements on the user terminal, the network device and the authentication server by using the existing authentication method.

Additional advantages and modifications will readily occur to those skilled in the art. Therefore, the invention in its broader aspects is not limited to the specific details and representative embodiments shown and described herein. Accordingly, various modifications and variations may be made without departing from the scope of the invention as defined by the appended claims and their equivalents.

## Claims

1. A method for implementing a domain authentication and a network access privilege authentication, comprising:
receiving, by a tracking control device, a domain authentication request from a user terminal; (2)
sending, by the tracking control device, the domain authentication request to a domain controller; (3)
receiving, by the tracking control device, a domain authentication result from the domain controller, in which a domain authentication on the user terminal is performed according to the domain authentication request; (4) and
**characterized in that** :
determining, by the tracking control device, whether the domain authentication on the user terminal is successful to obtain a valid access privilege of the domain according to the domain authentication result; if the user terminal is successful to obtain the valid access privilege of the domain, obtaining a network access privilege corresponding to the user terminal and authorizing the user terminal to access the network; otherwise, rejecting the user terminal to access the network. (5)

2. The method according to claim 1, further comprising: sending, by the tracking control device, the domain authentication result to the user terminal. (6)

3. The method according to claim 1 or 2, wherein the tracking control device tracks and analyzes all domain authentication messages between the user terminal and the domain authentication controller during the domain authentication.

4. The method according to claim 1, wherein the tracking control device directly obtains the network access privilege corresponding to the user terminal from itself.

5. The method according to claim 1, wherein the tracking control device obtains the network access privilege corresponding to the user terminal from another network

6. The method according to claim 5, wherein the tracking control device obtaining the network access privilege corresponding to the user terminal from another network device further comprises:
receiving, by the tracking control device, the network access privilege which is preconfigured corresponding to the user terminal from the another network device after the another network device receives a request from the tracking control device, or
receiving, by the tracking control device, the network access privilege which is dynamically assigned to the user terminal after the another network device receives the request from the tracking control device.

7. The method according to claim 1, wherein when the tracking control device determines that an accounting is needed on the user terminal, a designated accounting server is instructed to initiate the accounting after determining that the domain authentication on the user terminal is successful.

8. The method according to claim 7, wherein when the tracking control device monitors that a use's session is terminated by a domain authentication protocol, a time limit of the domain authentication on the user terminal expires, the user terminal sends a new request again or the user is offline, the accounting server is instructed to stop accounting.

9. A tracking control device, comprising: a device management module (401) for managing each of modules in the device; a route management module (402) for managing a message route; a user management module (403) for managing user information and privilege; and a message forwarding module (404) for sending a message from an input port of the device to an output port, further comprising:
a message parsing module (405) for parsing a domain authentication message sent by the message forwarding module and saving user information in the user management module; and
**characterized in that**
a message processing module for configuring a network access privilege for the user according to a domain authentication success message, which means that the user is successful to obtain a valid access privilege of the domain, parsed by the message parsing module, or rejecting the user to access the network according to a domain authentication failure message, which means that the user is failed to obtain the valid access privilege of the domain, parsed by the message parsing module.

10. The tracking control device according to claim 9, wherein the message processing module is built in the user management module (403).

11. A system for implementing a domain authentication and a network access privilege authentication, comprising a user terminal (301), a domain controller (302) and a tracking control device (303), wherein,
the user terminal (301) for sending a domain authentication request to the domain controller (302);
the domain controller (302) for performing a domain authentication on the user terminal (301) according to the domain authentication request, and returning a domain authentication result to the tracking control device (303); and
**characterized in that**
the tracking control device (303) for determining whether the domain authentication on the user terminal (301) is successful to obtain a valid access privilege of the domain according to the domain authentication result; if the user terminal (301) is successful, to obtain the valid access privilege of the domain, obtaining a network access privilege corresponding to the user terminal (301) and authorizing the user terminal (301) to access the network; otherwise, rejecting the user terminal (301) to access the network.

## Patentansprüche

1. Verfahren zum Implementieren einer Domänenauthentifikation und einer Netzwerkzugangsprivileg-Authentifikation, mit den folgenden Schritten:
eine Tracking-Steuereinrichtung empfängt eine Domänenauthentifikationsanforderung von einem Benutzerendgerät (2);
die Tracking-Steuereinrichtung sendet die Domänenauthentifikationsanforderung zu einer Domänensteuerung (3);
die Tracking-Steuereinrichtung empfängt ein Domänenauthentifikationsergebnis von der Domänensteuerung, in der eine Domänenauthentifikation an dem Benutzerendgerät gemäß der Domänenauthentifikationsanforderung ausgeführt wird (4); und
**dadurch gekennzeichnet, dass**
die Tracking-Steuereinrichtung bestimmt, ob die Domänenauthentifikation an dem Benutzerendgerät erfolgreich ist, um ein gültiges Zugangsprivileg der Domäne gemäß dem Domänenauthentifikationsergebnis zu erhalten; wenn das Benutzerendgerät beim Erhalten des gültigen Zugangsprivilegs der Domäne erfolgreich ist, wird ein dem Benutzerendgerät entsprechendes Netzwerkzugangsprivileg erhalten und der Zugang des Benutzerendgeräts zu dem Netzwerk autorisiert; andernfalls wird der Zugang des Benutzerendgeräts zu dem Netzwerk zurückgewiesen (5).

2. Verfahren nach Anspruch 1, ferner mit dem folgenden Schritt: die Tracking-Steuereinrichtung sendet das Domänenauthentifikationsergebnis zu dem Benutzerendgerät (6).

3. Verfahren nach Anspruch 1 oder 2, wobei die Tracking-Steuereinrichtung alle Domänenauthentifikationsnachrichten zwischen dem Benutzerendgerät und der Domänenauthentifikationssteuerung während der Domänenauthentifikation verfolgt und analysiert.

4. Verfahren nach Anspruch 1, wobei die Tracking-Steuereinrichtung das dem Benutzerendgerät entsprechende Netzwerkzugangsprivileg direkt von sich selbst erhält.

5. Verfahren nach Anspruch 1, wobei die Tracking-Steuereinrichtung das dem Benutzerendgerät entsprechende Netzwerkzugangsprivileg von einer anderen Netzwerkeinrichtung erhält.

6. Verfahren nach Anspruch 5, wobei das Erhalten des dem Benutzerendgerät entsprechenden Netzwerkzugangsprivilegs durch die Tracking-Steuereinrichtung von einer anderen Netzwerkeinrichtung ferner Folgendes umfasst:
die Tracking-Steuereinrichtung empfängt das Netzwerkzugangsprivileg, das entsprechend dem Benutzerendgerät vorkonfiguriert ist, von der anderen Netzwerkeinrichtung, nachdem die andere Netzwerkeinrichtung eine Anforderung von der Tracking-Steuereinrichtung empfängt; oder
die Tracking-Steuereinrichtung empfängt das Netzwerkzugangsprivileg, das dynamisch an das Benutzerendgerät vergeben wird, nachdem die andere Netzwerkeinrichtung die Anforderung von der Tracking-Steuereinrichtung empfängt.

7. Verfahren nach Anspruch 1, wobei, wenn die Tracking-Steuereinrichtung bestimmt, dass eine Buchhaltung auf dem Benutzerendgerät notwendig ist, ein designierter Buchhaltungsserver angewiesen wird, die Buchhaltung einzuleiten, nachdem bestimmt wird, dass die Domänenauthentifikation auf dem Benutzerendgerät erfolgreich ist.

8. Verfahren nach Anspruch 7, wobei, wenn die Tracking-Steuereinrichtung überwacht, dass die Sitzung eines Benutzers durch ein Domänenauthentifikationsprotokoll terminiert wird, eine Zeitgrenze der Domänenauthentifikation auf dem Benutzerendgerät abläuft, das Benutzerendgerät eine neue Anforderung nochmals sendet oder der Benutzer offline ist, der Buchhaltungsserver angewiesen wird, mit dem Buchhalten aufzuhören.

9. Tracking-Steuereinrichtung, umfassend: ein Einrichtungsverwaltungsmodul (401) zum Verwalten jedes der Module in der Einrichtung; ein Routenverwaltungsmodul (402) zum Verwalten einer Nachrichtenroute; ein Benutzerverwaltungsmodul (403) zum Verwalten von Benutzerinformationen und -privileg; und ein Nachrichtenweiterleitungsmodul (404) zum Senden einer Nachricht von einem Eingangsport der Einrichtung zu einem Ausgangsport, ferner umfassend:
ein Nachrichtenanalysemodul (405) zum Analysieren einer von dem Nachrichtenweiterleitungsmodul gesendeten Domänenauthentifikationsnachricht und zum Abspeichern von Benutzerinformationen in dem Benutzerverwaltungsmodul; und
**gekennzeichnet durch**
ein Nachrichtenverarbeitungsmodul zum Konfigurieren eines Netzwerkzugangsprivilegs für den Benutzer gemäß einer Domänenauthentifikations-Erfolgsnachricht, die bedeutet, dass der Benutzer beim Erhalten eines gültigen Zugangsprivilegs der Domäne erfolgreich ist, die **durch** das Nachrichtenanalysemodul analysiert wird, oder zum Zurückweisen des Zugangs des Benutzers zu dem Netzwerk gemäß einer Domänenauthentifikations-Fehlschlagnachricht, die bedeutet, dass der Benutzer beim Erhalten des gültigen Zugangsprivilegs der Domäne fehlgeschlagen ist, die **durch** das Nachrichtenanalysemodul analysiert wird.

10. Tracking-Steuereinrichtung nach Anspruch 9, wobei das Nachrichtenverarbeitungsmodul in dem Benutzerverwaltungsmodul (403) aufgebaut ist.

11. System zum Implementieren einer Domänenauthentifikation und einer Netzwerkzugangsprivileg-Authentifikation, das ein Benutzerendgerät (301), eine Domänensteuerung (302) und eine Tracking-Steuereinrichtung (303) umfasst, wobei
das Benutzerendgerät (301) zum Senden einer Domänenauthentifikationsanforderung zu der Domänensteuerung (302) dient;
die Domänensteuerung (302) zum Ausführen einer Domänenauthentifikation an dem Benutzerendgerät (301) gemäß der Domänenauthentifikationsanforderung und zum Zurückgeben eines Domänenauthentifikationsergebnisses an die Tracking-Steuereinrichtung (303) dient; und
**dadurch gekennzeichnet, dass**
die Tracking-Steuereinrichtung (303) zum Bestimmen dient, ob die Domänenauthentifikation an dem Benutzerendgerät (301) erfolgreich ist, um ein gültiges Zugangsprivileg der Domäne gemäß dem Domänenauthentifikationsergebnis zu erhalten; wenn das Benutzerendgerät (301) beim Erhalten des Zugangsprivilegs der Domäne erfolgreich ist, wird ein dem Benutzerendgerät (301) entsprechendes Netzwerkzugangsprivileg erhalten und der Zugang des Benutzerendgeräts (301) zu dem Netzwerk autorisiert; andernfalls wird der Zugang des Benutzerendgeräts (301) zu dem Netzwerk zurückgewiesen.

## Revendications

1. Procédé de mise en oeuvre d'une authentification de domaine et d'une authentification de privilège d'accès au réseau, comprenant :
la réception, par un dispositif de contrôle de suivi, d'une demande d'authentification de domaine depuis un terminal utilisateur (2) ;
l'envoi, par le dispositif de contrôle de suivi, de la demande d'authentification de domaine à une unité de commande de domaine (3) ;
la réception, par le dispositif de contrôle de suivi, d'un résultat d'authentification de domaine depuis l'unité de commande de domaine, une authentification de domaine sur le terminal utilisateur étant effectuée en fonction de la demande d'authentification de domaine (4) ; et
**caractérisé par** :
la détermination, par le dispositif de contrôle de suivi si l'authentification de domaine sur le terminal utilisateur est positive ou non afin d'obtenir un privilège d'accès valable du domaine en fonction du résultat d'authentification de domaine ; si le terminal utilisateur réussit à obtenir le privilège d'accès valable du domaine, l'obtention par le dispositif de contrôle de suivi d'un privilège d'accès réseau correspondant au terminal utilisateur et l'autorisation au terminal utilisateur, par le dispositif de contrôle de suivi, d'accéder au réseau ; dans le cas contraire, l'interdiction par le dispositif de contrôle de suivi de l'accès réseau au terminal utilisateur (5).

2. Procédé selon la revendication 1, comprenant en outre : l'envoi, par le dispositif de contrôle de suivi, du résultat d'authentification de domaine au terminal utilisateur (6).

3. Procédé selon la revendication 1 ou 2, dans lequel le dispositif de contrôle de suivi suit et analyse tous les messages d'authentification de domaine entre le terminal utilisateur et l'unité de commande d'authentification de domaine durant l'authentification de domaine.

4. Procédé selon la revendication 1, dans lequel le dispositif de contrôle de suivi obtient directement le privilège d'accès réseau correspondant au terminal utilisateur de lui-même.

5. Procédé selon la revendication 1, dans lequel le dispositif de contrôle de suivi obtient le privilège d'accès réseau correspondant au terminal utilisateur d'un autre dispositif de réseau.

6. Procédé selon la revendication 5, dans lequel l'obtention par le dispositif de contrôle de suivi du privilège d'accès réseau correspondant au terminal utilisateur d'un autre dispositif de réseau comprend en outre :
la réception, par le dispositif de contrôle de suivi, du privilège d'accès réseau qui est préconfiguré pour le terminal utilisateur depuis l'autre dispositif de réseau après que l'autre dispositif de réseau reçoit une demande depuis le dispositif de contrôle de suivi ; ou
la réception, par le dispositif de contrôle de suivi, du privilège d'accès réseau qui est assigné dynamiquement au terminal utilisateur après que l'autre dispositif de réseau reçoit la demande depuis le dispositif de contrôle de suivi.

7. Procédé selon la revendication 1, dans lequel quand le dispositif de contrôle de suivi détermine qu'une comptabilité est nécessaire sur le terminal utilisateur, un serveur de comptabilité désigné reçoit l'instruction de lancer la comptabilité après la détermination que l'authentification de domaine sur le terminal utilisateur est positive.

8. Procédé selon la revendication 7, dans lequel quand le dispositif de contrôle de suivi constate qu'une session d'utilisateur est terminée par un protocole d'authentification de domaine, qu'une limite de temps d'authentification de domaine sur le terminal utilisateur a expirée, que le terminal utilisateur envoie une nouvelle demande ou que l'utilisateur est déconnecté, le serveur de comptabilité reçoit l'instruction d'arrêter la comptabilité.

9. Dispositif de contrôle de suivi, comprenant : un module de gestion de dispositif (401) pour gérer chacun des modules dans le dispositif ; un module de gestion de route (402) pour gérer une route de messages ; un module de gestion d'utilisateurs (403) pour gérer des informations et privilèges d'utilisateurs ; et un module d'acheminement de message (404) pour envoyer un message depuis un port d'entrée du dispositif à un port de sortie, comprenant en outre :
un module d'analyse syntaxique de message (405) pour analyser syntaxiquement un message d'authentification de domaine envoyé par le module d'acheminement de message et sauvegarder des informations d'utilisateur dans le module de gestion d'utilisateurs ; et
**caractérisé par**
un module de traitement de message pour configurer un privilège d'accès réseau de l'utilisateur en fonction d'un message d'authentification de domaine positive, qui signifie que l'utilisateur a réussi à obtenir un privilège d'accès valable du domaine, analysé syntaxiquement par le module d'analyse syntaxique de message, ou pour refuser à l'utilisateur l'accès au réseau en fonction d'un message d'authentification de domaine négative, qui signifie que l'utilisateur n'a pas obtenu le privilège d'accès valable du domaine, analysé syntaxiquement par le module d'analyse syntaxique de message.

10. Dispositif de contrôle de suivi selon la revendication 9, dans lequel le module de traitement de message est construit dans le module de gestion d'utilisateurs (403).

11. Système de mise en oeuvre d'une authentification de domaine et d'une authentification de privilège d'accès au réseau, comprenant un terminal utilisateur (301), une unité de commande de domaine (302) et un dispositif de contrôle de suivi (303), dans lequel :
le terminal utilisateur (301) est destiné à envoyer une demande d'authentification de domaine à l'unité de commande de domaine (302) ;
l'unité de commande de domaine (302) est destinée à exécuter une authentification de domaine sur le terminal utilisateur (301) en fonction de la demande d'authentification de domaine, et à renvoyer un résultat d'authentification de domaine au dispositif de contrôle de suivi (303), et
**caractérisé en ce que** :
le dispositif de contrôle de suivi (303) est destiné à déterminer si l'authentification de domaine sur le terminal utilisateur (301) est positive ou non afin d'obtenir un privilège d'accès valable du domaine en fonction du résultat d'authentification de domaine ; si le terminal utilisateur (301) réussit à obtenir le privilège d'accès valable du domaine, à obtenir un privilège d'accès réseau correspondant au terminal utilisateur (301) et à autoriser le terminal utilisateur à accéder au réseau ; dans le cas contraire, à interdire l'accès réseau au terminal utilisateur (301).
